# EUROPÄISCHE PATENTSCHRIFT

(11) **EP 3 806 695 B1**
(45) Veröffentlichungstag und Bekanntmachung des Hinweises auf die Patenterteilung: **03.08.2022**
(21) Anmeldenummer: 19728434.2
(22) Anmeldetag: 04.06.2019
(51) Int. Cl.: A47B 88/90, F16B 12/38

(54) **SCHUBKASTEN UND VERFAHREN ZUR MONTAGE EINER RÜCKWAND AN EINER SEITENZARGE EINES SCHUBKASTENS**
DRAWER AND METHOD FOR MOUNTING A REAR PANEL ON A SIDE FRAME OF A DRAWER
TIROIR ET PROCÉDÉ DE MONTAGE D'UNE PAROI ARRIÈRE SUR UN CHÂSSIS LATÉRAL D'UN TIROIR

(30) Priorität: 18.06.2018 DE 102018114585
(43) Veröffentlichungstag der Anmeldung: 21.04.2021
(73) Patentinhaber: Paul Hettich GmbH & Co. KG, 32278 Kirchlengern (DE)
(72) Erfinder: PRUTSCH, Andree, 49074 Osnabrück (DE)
(74) Vertreter: Dantz, Jan Henning
(86) Internationale Anmeldenummer: PCT/EP2019/064487
(87) Internationale Veröffentlichungsnummer: WO 2019/243041

(56) Entgegenhaltungen:
- EP-A1- 3 009 692
- WO-A1-2012/068604
- WO-A1-2013/056282
- WO-A1-2018/145999
- DE-U1-202012 000 898

## Beschreibung

Die vorliegende Erfindung betrifft einen Schubkasten nach dem Oberbegriff des Anspruches 1 und ein Verfahren zur Montage einer Rückwand an einer Seitenzarge eines Schubkastens.

Die nachveröffentlichte Patentanmeldung DE 10 2017 102 643 offenbart einen Schubkasten mit einer Rückwand, einer Frontblende und zwei die Rückwand und die Frontblende verbindenden Seitenzargen, wobei an oder in zumindest einer Seitenzarge ein Verbindungselement vorgesehen ist, das Rastmittel aufweist und an oder in einer Rastaufnahme an der Rückwand verrastbar ist. Dadurch können Rückwände, die unterschiedliche Geometrien oder Materialien aufweisen, an den Seitenzargen des Schubkastens befestigt werden. Um kompatibel mit dem Rastmittel zu sein, bedarf es einer teilweise aufwendigen und kostenintensiven Ausgestaltung der Rückwand, insbesondere bei dünnwandigen Stahlrückwänden, die mittels Stanzwerkzeugen bearbeitet werden müssen, um an den Verbindungselementen einfach befestigt werden zu können.

Die EP 2 398 350 B1 offenbart eine Eckverbindung für einen Schubkasten, bei der ein Verbinder vorgesehen ist, der auf ein erstes Wandelement aufsteckbar ist und eine Aufnahme zum Einfügen eines winklig dazu angeordneten Wandelementes aufweist. In den Verbinder ist ein Halteelement eingesteckt, mittels dem das zweite Wandelement an dem Verbinder festlegbar ist. Dadurch können die Wandelemente durch einfache Montageschritte aneinander fixiert werden, wobei die Stabilität der Verbindung durch Toleranzen an der Aufnahme begrenzt ist.

EP 3 009 692 A1 offenbart eine Verbindungsvorrichtung zur Montage einer Rückwand an einer Seitenzarge eines Schubkastens. Zur Fixierung einer Rückwand wird ein Anbringabschnitt gedreht, der unterschiedliche Rückwände fixieren kann. Weitere Schubkästen mit einer Vorrichtung zum Fixieren einer Rückwand offenbaren DE 20 2012 000 898 U1 und WO 2013 / 056 282 A1.

Es ist daher Aufgabe der vorliegenden Erfindung, einen Schubkasten mit einer stabilen Festlegung einer Rückwand an einer Seitenzarge zu schaffen, der einfach montiert werden kann und zudem eine kostengünstige Fertigung der Rückwand ermöglicht.

Zur Lösung dieser Aufgabe wird ein Schubkasten mit den Merkmalen des Anspruches 1 und ein Verfahren zur Montage einer Rückwand an einer Seitenzarge eines Schubkastens mit den Merkmalen des Anspruches 13 vorgeschlagen.

Bei dem erfindungsgemäßen Schubkasten ist an oder in zumindest einer Seitenzarge ein Adapter vorgesehen ist, der mindestens ein Verbindungselement zur Fixierung der Rückwand aufweist. Das Verbindungselement ist an oder in einem Adapter drehbar gelagert, wobei der Adapter in seiner Ausgestaltung als Endstück der Seitenzarge an dieser befestigt ist. Dadurch ist das Verbindungselement unverlierbar an oder in der Seitenzarge fixiert und somit auch für wiederholte Montagevorgänge der Rückwand geeignet. Zudem kann eine Vorfixierung der Rückwand an dem Verbindungselement über Rastmittel erfolgen.

Die drehbare Lagerung des Verbindungselementes ermöglicht es, individuell benötigte Konturen zur Befestigung von verschiedenen Rückwänden bereitzustellen, wobei die Rückwände dadurch in ihrer Gestalt einfacher gehalten werden können, um Kosten zu sparen.

Das Verbindungselement ist so gestaltet, dass es mindestens zwei, aber auch drei oder mehr Anlage- oder Montageflächen aufweist, die die Montage von Rückwänden aus verschiedenen Materialien oder unterschiedlichen Geometrien ermöglichen. Die Anlage- oder Montageflächen sind dazu winklig zueinander ausgerichtet oder auf den gegenüberliegenden Seiten zueinander angeordnet. Um diese Anlage- und Montageflächen schnell und präzise zur Verfügung zu stellen, ist das Verbindungselement an oder in dem Adapter drehbar gelagert. Somit ist nach Montage der Adapter an die Seitenzargen des Schubkastens lediglich die benötigte Anlage- oder Montagefläche auszuwählen, die für die jeweilige Rückwand erforderlich ist. Die bereitgestellte Anlage- oder Montagefläche definiert exakt die Einbauposition der Rückwand. Ist mehr als ein Verbindungselement drehbar um eine Achse in oder an einer Seitenzarge gelagert, befinden sich die Anlage- und Montageflächen vorzugsweise in einem gleichen Abstand zu der jeweiligen Drehachse. Dadurch ist gewährleistet, dass die zu montierenden verschiedenen Rückwände immer den gleichen Abstand zu den Enden der Seitenzargen aufweisen. Die Achse des Verbindungselementes ist dabei erfindungsgemäß parallel zum Boden und zur Längsrichtung der Rückwand ausgerichtet.

Erfindungsgemäß ist das Verbindungselement um eine Achse drehbar gelagert und die mindestens zwei Anlageflächen weisen einen unterschiedlichen Abstand zu der Achse auf.

Bevorzugt ist die Außenkontur des Verbindungselementes derart ausgestaltet, dass in den eingestellten Montagepositionen eine lösbare mechanische Fixierung des Verbindungselementes gegen Verdrehung erfolgt. Bevorzugt wird hier eine elastisch verformbare Rastverbindung verwendet. Ein unbeabsichtigtes Verdrehen der Verbindungselemente beim Montagevorgang ist somit ausgeschlossen.

In einem bevorzugten Beispiel wird eine Rückwand aus einem Stahlblech mit einer Montagegeometrie des Verbindungselementes befestigt, die Rastmittel aufweist, die in eine Öffnung der Rückwand eingeclipst sind. Die Rastmittel können dabei aus Schnapphaken bestehen, die eine Geometrie aufweisen, die ein Lösen der Verbindung aus der Öffnung der Metallrückwand durch elastisches Verformen der Schnapphakenstege erlaubt.

Vorzugsweise ist ein Sicherungselement im Wesentlichen parallel zur Längsrichtung von einer Rückseite in Richtung der Frontblende in das Verbindungselement einschiebbar. Das Sicherungselement kann dabei klemmend an den Rastmitteln festgelegt sein, wodurch eine kraftschlüssige Fixierung der Rastmittel erfolgt. Dadurch eignet sich die Montage des Sicherungselementes besonders gut für die Serienfertigung, da eine Montage der Rückwand ebenfalls parallel zur Längsrichtung der Seitenzarge erfolgen kann und anschließend eine Fixierung des Sicherungselementes in die gleiche Richtung erfolgt, wobei die Zugänglichkeit zu dem Sicherungselement über die Rückseite des Schubkastens gegeben ist.

Für eine besonders einfache Montage kann an dem Verbindungselement das Sicherungselement integral angeformt sein und über eine Sollbruchstelle von dem Verbindungselement abgetrennt werden. In einem ersten Schritt kann dann das Verbindungselement zusammen mit dem Sicherungselement über den Adapter an oder in der Seitenzarge montiert werden, um dann in einem zweiten Schritt das Sicherungselement von dem übrigen Verbindungselement abzutrennen und für eine kraftschlüssige Fixierung zu sorgen. In einer bevorzugten Ausgestaltung wird das Sicherungselement im Wesentlichen parallel zur Längsrichtung der Seitenzarge montiert, insbesondere durch Einschieben des Sicherungselementes in das Verbindungselement. Die im Verbindungselement befindliche Öffnung zur Aufnahme des Sicherungselementes und der Steg des Sicherungselementes, der in die Öffnung eingreift, sind dabei bevorzugt so gestaltet, dass das Sicherungselement verdrehgesichert in der Öffnung gehalten wird.

Das Sicherungselement kann mindestens einen Keil aufweisen, der einen Raststeg des Rastmittels klemmend fixiert. Vorzugsweise weist das Sicherungselement zwei miteinander verbundene Keile auf, die zwei Raststege des Rastmittels klemmend fixieren.

Bevorzugt weist das Sicherungselement auch eine Öffnung, vorzugsweise Durchgangsbohrung auf, welche in Montagerichtung, insbesondere koaxial zur Öffnung des Verbindungselementes ausgerichtet ist. Dabei kann das Sicherungselement selbst eine Anlagefläche für eine Rückwand ausbilden.

Insbesondere bei höheren Schubkästen kann es notwendig sein, mehr als nur ein Verbindungselement pro Seitenzarge zur Fixierung der Rückwand zu verwenden. Dazu werden die Verbindungselemente in einem funktionalen Abstand übereinander in dem Adapter angeordnet, so dass eine optimale Befestigung der Rückwand erfolgt. Zur Befestigung einer Rückwandvariante aus einem Holzwerkstoff wird das Verbindungselement entsprechend um seine Drehachse verstellt, so dass eine benötigte Anlagefläche planparallel zur Montagefläche der Rückwand zeigt. Dabei ist die Anlagefläche so ausgebildet, dass die Montagefläche der Rückwand bündig mit den Anlageflächen der Verbindungselemente der Adapter zur Anlage kommt. Bei einer bevorzugten Ausgestaltung mit zwei Anlageflächen beträgt der Rotationswinkel des Verbindungselementes 180°, bei drei Anlage- oder Montageflächen für drei Rückwandvarianten beträgt der Rotationswinkel 120°.

Die Rückwand wird nach Anlage an die Verbindungselemente im Anschluss über Bohrungen in Rückwand und Öffnungen in den Adaptern zueinander zentriert und mittels Blechschrauben verschraubt.

Bei dem erfindungsgemäßen Montageverfahren für einen Schubkasten wird zunächst ein Verbindungselement in eine Aufnahme an einem Adapter, die durch ausgeprägte Laschen gebildet sein kann, an oder in einer Seitenzarge in einer Richtung im Wesentlichen senkrecht zur Längsrichtung der Seitenzarge eingesetzt. Der Adapter kann aber in Gänze auch als Vormontagebaugruppe bereitgestellt werden die das Verbindungselement einschließt, da er in seiner Gestalt den zur Rückwand zeigenden Bereich der Seitenzarge komplett umfasst. Entsprechend der Auswahl der zu montierenden Rückwand, in diesem Fall bevorzugt aus Stahlblech, erfolgt die Einstellung der benötigten Montagefläche am Verbindungselement durch Drehung um eine Achse, wobei die Achse parallel zu einem Boden und parallel zu einer Längsrichtung der Rückwand ausgerichtet ist, um den rotatorischen Freiheitsgrad, bis die Montagefläche mit Hilfe ihrer Verdrehsicherungselemente, respektive Rastnasen, in die finale Montageposition gelangt und an einer Rastkante des Adapters einrastet. Anschließend wird die aus Stahlblech bestehende Rückwand auf ein Rastmittel an dem Verbindungselement aufgeschoben und an dem Rastmittel verrastet, bevor das Rastmittel über ein Sicherungselement kraftschlüssig fixiert wird.

Alternativ wird das Verbindungselement in die Montageposition für plattenförmige Rückwände, wie zum Beispiel aus Holzwerkstoffen, gedreht und verrastet, so dass die dazu benötigte Anlagefläche planparallel zur Montagefläche der Rückwand zeigt. Anschließend wird eine Rückwand an das Verbindungselement angelegt und durch eine Schraube durch die Rückwand in eine Öffnung des Adapters oder des Verbindungselementes fixiert. Bei dem erfindungsgemäßen Verfahren kann somit optional eine Rückwand über ein Verrasten und kraftschlüssiges Fixieren der Rastmittel montiert werden oder alternativ über das Einbringen einer Schraube, insbesondere bei Einsatz einer Rückwand aus einem Holzwerkstoff. Über ein und dasselbe Verbindungselement lassen sich somit unterschiedliche Typen von Rückwänden auf unterschiedliche Art und Weise befestigen.

Die Erfindung wird nachfolgend anhand mehrerer Ausführungsbeispiele mit Bezug auf die beigefügten Zeichnungen näher erläutert. Es zeigen:

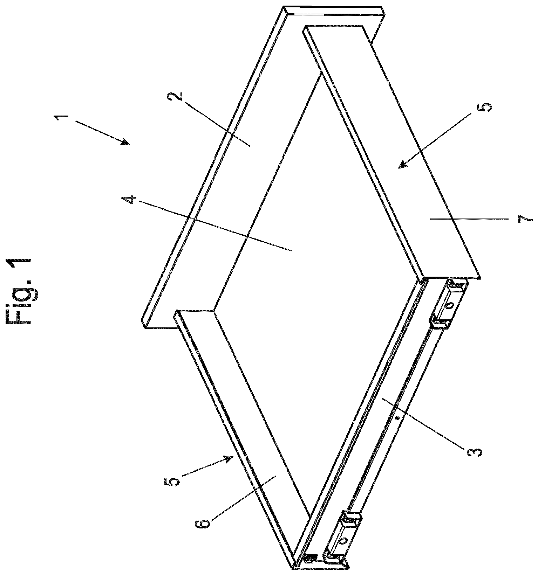

- Figur 1: eine perspektivische Ansicht eines Schubkastens gemäß einem ersten Ausführungsbeispiel;
- Figur 2: eine perspektivische Ansicht eines Adapters mit zwei Verbindungselementen zur Befestigung einer Rückwand nach einem ersten Ausführungsbeispiel
- Figuren 3a, 3b: zwei perspektivische Ausschnittansichten eines Adapters mit Verbindungselementen in Montagepositionen zur Befestigung einer Rückwand nach einem ersten Ausführungsbeispiel;
- Figur 4: eine Detail- Schnittansicht einer Rückwandverbindung des Schubkastens mit einer Rückwand nach einem ersten Ausführungsbeispiel;
- Figur 5: eine perspektivische Ansicht eines Schubkastens gemäß einem modifizierten Ausführungsbeispiel;
- Figur 6: eine perspektivische Ausschnittansicht eines Adapters mit einem Verbindungselement in Montageposition für das modifizierte Ausführungsbeispiel;
- Figur 7: eine Detail- Schnittansicht einer Rückwandverbindung des Schubkastens gemäß einem modifizierten Ausführungsbeispiel;
- Figur 8a - 8e: fünf perspektivische Ausschnittansichten eines Adapters mit Verbindungselementen zur Verdeutlichung des Drehvorgangs derselben, und
- Figur 9: ein Ansicht eines modifizierten Adapters mit einem verschiebbaren Verbindungselement.

Ein Schubkasten 1 umfasst eine Frontblende 2 und eine Rückwand 3, in diesem Fall eine Blechrückwand, die über einen horizontalen Boden 4 miteinander verbunden sind. Ferner sind an gegenüberliegenden Seiten des Bodens 4 Seitenzargen 5 vorgesehen, die die Frontblende 2 mit der Rückwand 3 verbinden. Jede Seitenzarge 5 umfasst dabei ein inneres Wandelement 6 und ein äußeres Wandelement 7, die zwischen sich einen Hohlraum ausbilden.

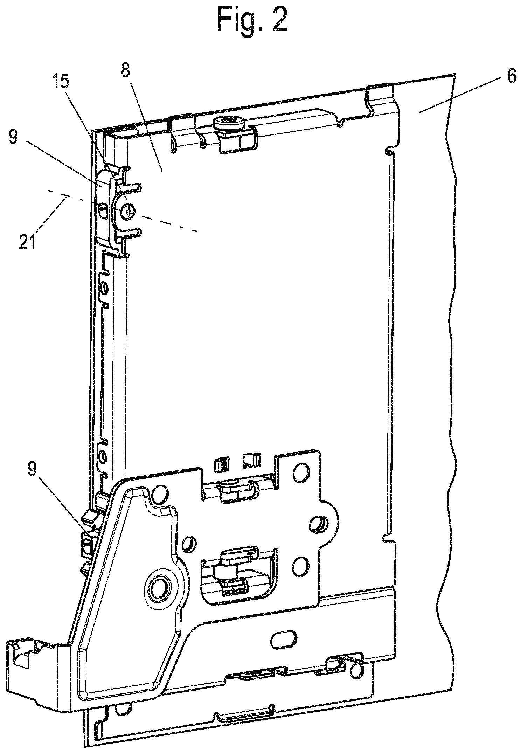

In Figur 2 ist der Endbereich des Schubkastens 1 mit der Seitenzarge 5 gezeigt, wobei das äußere Wandelement 7 abgenommen wurde, so dass nur noch das innere Wandelement 6 sichtbar ist. An dem Wandelement 6 ist ein Adapter 8 fixiert, der durch das äußere Wandelement 7 ansonsten verdeckt wäre. Der Adapter 8 ist zur Verbindung der Seitenzarge 5 mit der Rückwand 3 vorgesehen, besteht aus mindestens einem gekanteten Blechteil und weist an seinem hinteren Ende, zur Rückwand 3 zeigend, Aufnahmelaschen 15 zur Befestigung eines Verbindungselementes 9 auf. Das Verbindungselement 9 ist in diesem Ausführungsbeispiel in den Aufnahmelaschen 15 um eine Achse 21 drehbar gelagert.

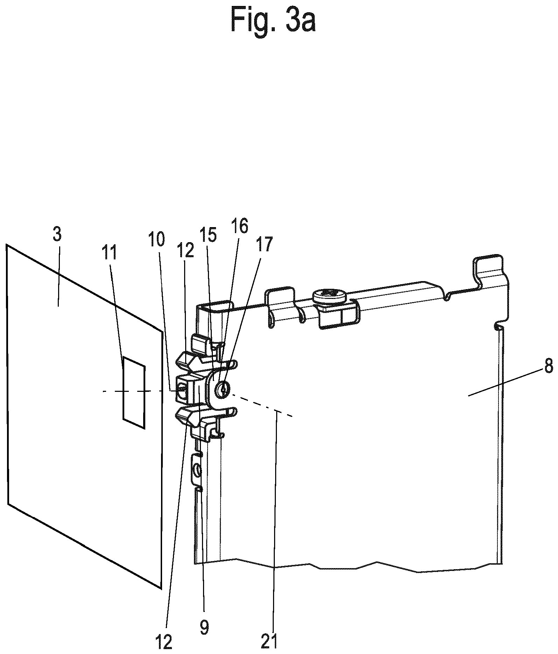

In Figur 3a ist die Rückwand 3 in Montageposition zum Adapter 8 gebracht. Die Rückwand 3 ist hier schematisch dargestellt. Das Verbindungselement 9, von dem in dieser Ausschnittansicht nur eines gezeigt wird, ist mit einem zylindrischen Lagerzapfen 17 in beidseitigen Öffnungen 16 zweier Laschen 15 aufgenommen und befindet sich bereits, um die Achse 21 gedreht, in der Montageposition zur Aufnahme der Rückwand 3. Ein Sicherungselement 14 ist integral am Verbindungselement 9 ausgebildet, wobei die Verbindungsstelle als eine Sollbruchstelle 19 ausgebildet ist. Erkennbar ist, dass die Montage auch über das Sicherungselement 14 hinweg durchgeführt werden kann, ohne dieses vorher zu entfernen. Eine Öffnung 11 der Rückwand 3 dient zur Aufnahme von Rastmitteln 12 des Verbindungselementes 9 und ist bevorzugt als einfache rechteckige Öffnung in der Rückwand 3 ausgebildet. Durch die an die verschiedenen Rückwände 3, 3' adaptierbaren Verbindungselemente 9 kann auf eine integrale Ausbildung der Rückwand 3 im Bereich der Öffnung 11 verzichtet werden. Die Verbindungselemente 9 verrasten mit ihren an den Enden ausgebildeten Rastmitteln 12 beim Aufschieben der Rückwand 3 in einer Montagerichtung 10 auf das Verbindungselement 9 in der Öffnung 11 und fixieren die Rückwand 3 an einer Anlagefläche 29 einer Verdrehsicherung 23 des Verbindungselementes 9, die gleichzeitig als Referenzanschlag dient. Ist die Rückwand 3 in dem Rastmittel12 fixiert bzw. verrastet, wird das Sicherungselement 14 an der Sollbruchstelle 19 vom Verbindungselement 9 getrennt, z. B. abgebrochen, und dann in Montagerichtung 10 mit einem Steg 18 in eine Öffnung 20 eingeführt, bis Keile 13 sich mit den Rastmitteln 12 verklemmen und diese geklemmt halten. Damit ist die Montageendposition der Rückwand 3 erreicht und gesichert.

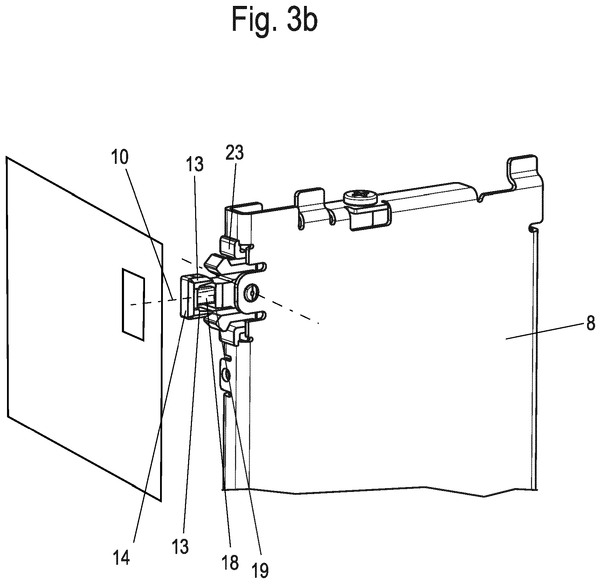

Figur 3b zeigt die gleiche Anordnung wie in 3a, allerdings ohne Sicherungselement 14. Erkennbar ist die Öffnung 20, in der das Sicherungselement 14 nach dem Lösen von der Sollbruchstelle 19 mit seinem Steg 18 in das Verbindungelement 9 eingeschoben wird.

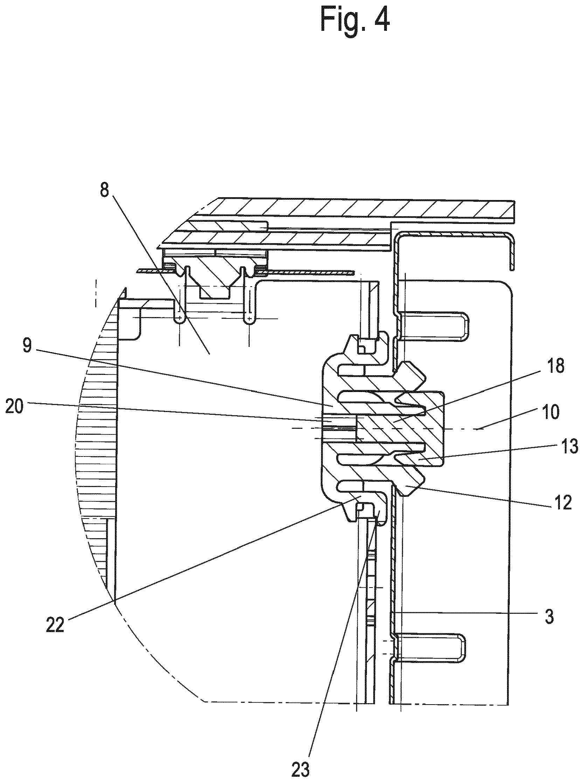

Figur 4 zeigt die montierte Rückwand 3 an dem Adapter 8. Das am Adapter 8 befindliche Verbindungselement 9 wird durch die Anlage der Rastnasen 23 an der Wandung des Adapters 8 am Verdrehen gehindert. Die Rückwand 3 ist mit den Rastmitteln 12 verrastet, das Sicherungselement 14 in das Verbindungselement 9 eingeschoben, so dass sich die Keile 13 mit den Rastmitteln 12 verklemmen und die Rastwirkung verstärken. Der Steg 18 ist in der Öffnung 20 gelagert und stabilisiert das Sicherungselement 14 in seiner Position. Dadurch, dass die Öffnung 20 nicht kreisrund ist, sondern eine ebene Fläche an einer Seitenwandung aufweist, wird eine Verdrehsicherung erreicht, so dass sich das Sicherungselement 14 nicht um die Montagerichtung 10 drehen kann.

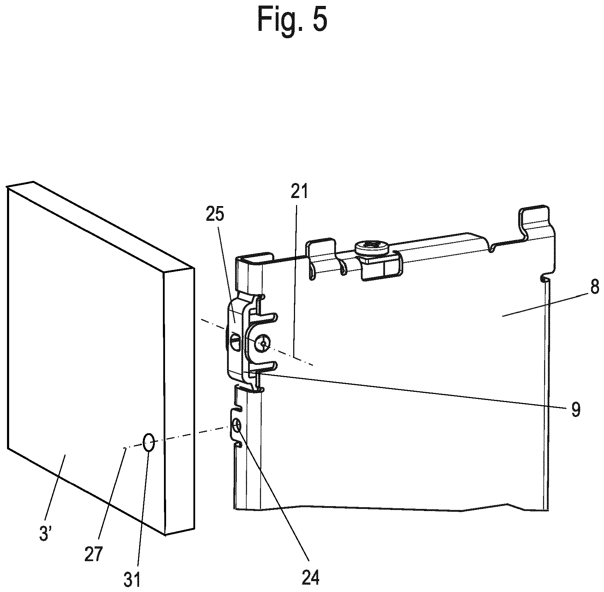

Figur 5 zeigt einen modifizierten Schubkasten 1' mit einer modifizierten Rückwand 3', hier einer Holzwerkstoffrückwand, und den Seitenzargen 5 mit den äußeren Wandelementen 7, so dass die Adapter 8 nicht mehr sichtbar sind. Gezeigt ist hier eine Verbindung der Rückwand 3' über je eine Schraube 26 an je einer Seitenzarge 5, es können aber auch mehrere Verbindungselemente 9 mit mehreren Schrauben 26 eingesetzt werden, wenn zum Beispiel die Schubkastenhöhe es erfordert.

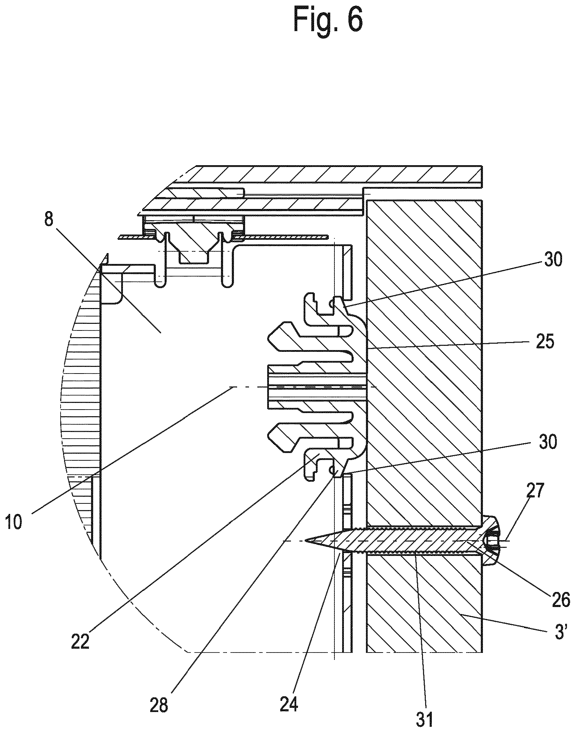

In Figur 6 ist die Rückwand 3', in Montageposition zum Adapter 8 gebracht. Die Rückwand 3' ist ebenfalls schematisch dargestellt. Das Verbindungselement 9 befindet sich, um die Achse 21 gedreht, mit einer Anlagefläche 25 in der Montageposition zur Aufnahme der Rückwand 3'. Die Rückwand 3' wird zur Montage an die Anlagefläche 25 angelegt und mit einer Bohrung 31 konzentrisch über eine Öffnung 24 des Adapters 8 in Deckung gebracht. Anschließend werden die Bauteile mit der Schraube 26 verschraubt.

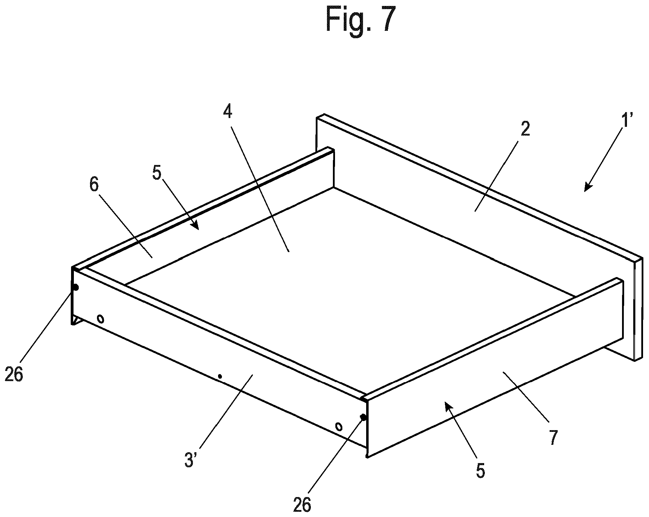

Figur 7 zeigt die montierte Rückwand 3' an dem Adapter 8. Das am Adapter 8 befindliche Verbindungselement 9 wird durch die Anlage von Rastnasen 28 an Rastkanten 30 der Wandung des Adapters 8 am Verdrehen gehindert. Die Rückwand 3' liegt plan an der Anlagefläche 25 des Verbindungselementes 9 an. Die durch die Bohrung 31 geführte Schraube 26 fixiert die Rückwand 3' konzentrisch in der Bohrung 24. Die Bohrung 31 ist mit einem geringen Übermaß zum Außendurchmesser der Schraube 26 gefertigt und hat mindestens ein Bohrungsspiel < 0,2mm, bevorzugt < 0,1 mm so dass eine passgenaue Positionierung der Rückwand 3'an den Adapter 8 ermöglicht wird

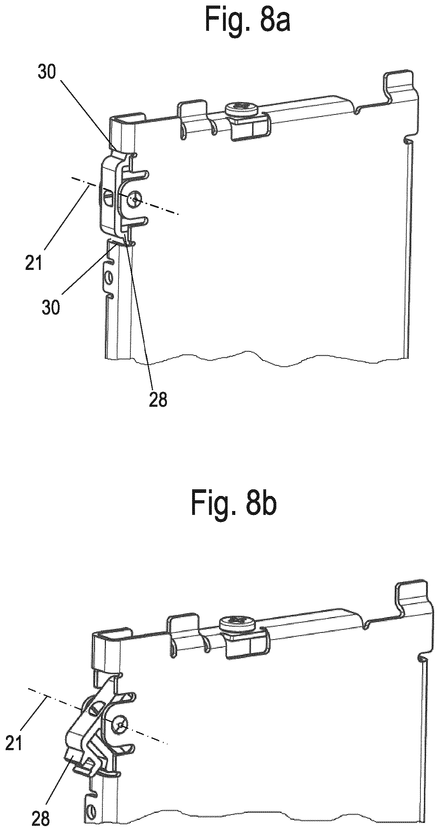

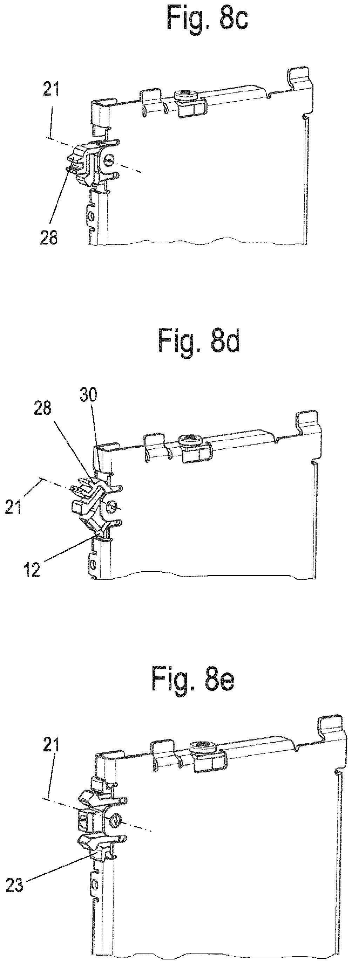

Die Figuren 8 a bis 8e zeigen die schrittweise Darstellung eines Rotationsvorganges von dem Verbindungselement 9 um die Achse 21. In Figur 8a befindet sich das Verbindungselement 9 in seiner Ausgangsposition zur Befestigung für eine Rückwand 3'. Durch die Rastnasen 28 wird das Verbindungselement an den Rastkanten 30 des Adapters 8 gehalten, so dass ein Verdrehen nicht möglich ist. Um ein Verdrehen zu ermöglichen, bedarf es einer äußeren Krafteinwirkung auf eine Rastnase 28, in diesem Anwendungsfall auf die untere Rastnase 28. Dabei wird ein Raststeg 22 mit einem Werkzeug, z. B. einem Schraubendreher, nach innen in Richtung des Raststeges 12 gebogen, so dass die Rastnase 28 frei wird und über die Rastkante 30 gedreht werden kann. Die Figuren 8b und 8 c zeigen ein freies Drehen des Verbindungselementes 9 um die Achse 21. In Figur 8d ist die Drehung nahezu abgeschlossen. In dieser Phase der Drehung gerät die Rastnase 12 mit der Rastkante 30 in Kontakt, wobei die Rastnase 12 so ausgebildet ist, dass sie durch ihre abgeschrägte Außenkontur an der Rastkante vorbeigleitet und keine Blockade verursacht, die einen Eingriff notwendig macht, um diese zu beheben. Auch die im Verlauf der Drehung um die Achse 21 nachfolgende Rastnase 23 ist in ihrer Außenkontur abgerundet bzw. abgeschrägt, so dass sie an der Rastkante 30 vorbeigleitet und ein Durchschwenken in die finale Position, die in Figur 8e gezeigt ist, ohne zusätzlichen Eingriff erfolgt.

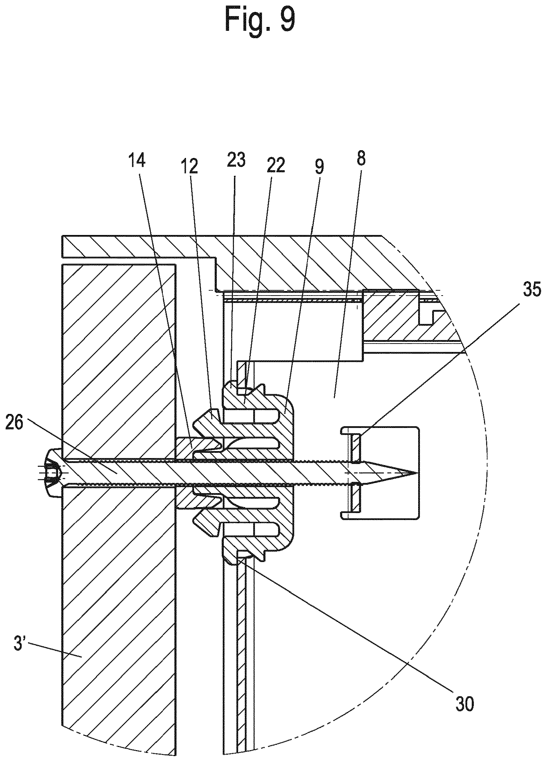

In Figur 9 ist eine montierte plattenförmige Rückwand 3' aus einem Holzwerkstoff an dem Adapter 8 festgelegt. Das Verbindungselement 9 ist an dem Adapter 8 drehbar gelagert. Durch Rastnasen 23 wird das Verbindungselement an einer Wandung des Adapters 8 verrastet. An dem Verbindungselement 9 ist ein verschiebbar gelagertes Sicherungselement 14 vorgesehen.

Die Rückwand 3' ist über mindestens eine Schraube 26 fixiert, die mit einem Befestigungselement 35, insbesondere einem integral mit dem Adapter 8 ausgebildeten Steg, verschraubt ist. Die Schraube 26 durchgreift zudem das Sicherungselement 14 und das Verbindungselement 9. Das Sicherungselement 14 ist relativ zu dem Verbindungselement 9 verschiebbar und kann beispielsweise nach Entfernen einer Sollbruchstelle zu dem Verbindungselement 9 verschoben werden. Dadurch wird auch die Anlagefläche an dem Sicherungselement 14 zu dem Verbindungselement 9 verschoben und die Rückwand 3' liegt an der rückwärtigen Anlagefläche des Sicherungselementes 12 an. Durch die Schiebemöglichkeit des Sicherungselementes 14 sind zwei voneinander beabstandete Anlagepositionen für die Rückwand 3' vorgesehen. Durch Drehen des Sicherungselementes 9 können noch weitere Anlagepositionen für die Rückwand 3' bereitgestellt werden.

### Bezugszeichenliste

- 1, 1': Schubkasten
- 2: Frontblende
- 3,3': Rückwand
- 4: Boden
- 5: Seitenzarge
- 6: Wandelement
- 7: Wandelement
- 8: Adapter
- 9: Verbindungselement
- 10: Montagerichtung
- 11: Öffnung
- 12: Rastmittel
- 13: Keil
- 14: Sicherungselement
- 15: Lasche
- 16: Öffnung
- 17: Lagerzapfen
- 18: Steg
- 19: Sollbruchstelle
- 20, 20': Öffnung
- 21: Achse
- 22: Raststeg
- 23: Rastnase
- 24: Öffnung
- 25: Anlagefläche
- 26: Schraube
- 27: Mittellinie
- 28: Rastnase
- 29, 29': Anlagefläche
- 30: Rastkante
- 31: Bohrung
- 35: Befestigungselement

## Patentansprüche

1. Schubkasten (1) mit einer Rückwand (3), einer Frontblende (2), und zwei die Frontblende (2) und die Rückwand (3) verbindenden Seitenzargen (5) und einem Boden (4), wobei an oder in zumindest einer Seitenzarge (5) mindestens ein Adapter (8) vorgesehen ist, der mindestens ein Verbindungselement (9) zur Fixierung der Rückwand (3) aufweist, wobei das mindestens eine Verbindungselement (9) mindestens zwei Anlageflächen (25, 29, 29') aufweist, an die die Rückwand (3) anlegbar ist und das Verbindungselement (9) drehbar in oder an dem Adapter (8) gelagert wobei das Verbindungselement (9) um eine Achse (21) drehbar gelagert ist und mindestens zwei Anlageflächen (25, 29) in einem unterschiedlichen Abstand zu der Achse (21) angeordnet sind, **dadurch gekennzeichnet, dass** die Achse (21) parallel zu dem Boden (4) und parallel zu einer Längsrichtung der Rückwand (3, 3') ausgerichtet ist.

2. Schubkasten nach Anspruch 1, **dadurch gekennzeichnet, dass** die mindestens zwei Anlageflächen (25, 29, 29') an dem Verbindungselement (9) winklig zueinander ausgerichtet oder auf gegenüberliegenden Seiten des Verbindungselementes (9) angeordnet sind.

3. Schubkasten nach Anspruch 1 oder 2, **dadurch gekennzeichnet, dass** das Verbindungselement (9) mindestens eine, bevorzugt zwei Rastnasen (23, 28) zur Verdrehsicherung in dem Adapter (8) aufweist.

4. Schubkasten nach einem der vorhergehenden Ansprüche, **dadurch gekennzeichnet, dass** das Verbindungselement (9) mindestens ein Rastmittel (12) zur Befestigung der Rückwand (3) aufweist.

5. Schubkasten nach Anspruch 4, **dadurch gekennzeichnet, dass** das Rastmittel (12) mindestens einen von der zugehörigen Anlagefläche (29) hervorstehenden Raststeg umfasst, der eine Öffnung (11) in der Rückwand (3) durchgreift.

6. Schubkasten nach Anspruch 4 oder 5, **dadurch gekennzeichnet, dass** ein Sicherungselement (14) vorgesehen ist, mittels dem die Rastmittel (12) in einer verrasteten Position gegen ein Entriegeln gesichert sind.

7. Schubkasten nach einem der vorhergehenden Ansprüche, **dadurch gekennzeichnet, dass** der Adapter (8) zwei in unterschiedlicher Höhe angeordnete Verbindungselemente (9) aufweist.

8. Schubkasten nach einem der vorhergehenden Ansprüche, **dadurch gekennzeichnet, dass** die Rückwand (3) aus einem Stahlblech ausgebildet ist, die an gegenüberliegenden Seiten an mindestens einem Verbindungselement (9) verrastet ist.

9. Schubkasten nach einem der vorhergehenden Ansprüche, **dadurch gekennzeichnet, dass** die Rückwand (3') aus einem plattenförmigen Holzwerkstoff hergestellt ist und an mindestens einer Anlagefläche (25) eines jeweilig an gegenüberliegenden Seitenzargen angeordneten Verbindungselements (9) anliegt.

10. Schubkasten nach Anspruch 9, **dadurch gekennzeichnet, dass** die Rückwand (3') über Schrauben (26) an dem Adapter (8) festgelegt ist.

11. Schubkasten nach einem der vorhergehenden Ansprüche, **dadurch gekennzeichnet, dass** das Verbindungselement (9) ein Formteil aus Kunststoff ist.

12. Schubkasten nach einem der vorhergehenden Ansprüche, **dadurch gekennzeichnet, dass** in dem Adapter (8) und/ oder Verbindungselement und/oder Sicherungselement mindestens eine Öffnung (24, 20, 20') zum Befestigen der Rückwand (3') aus einem Holzwerkstoff mittels einer Schraube (26) vorgesehen ist.

13. Verfahren zur Montage einer Rückwand (3) an einer Seitenzarge (5) eines Schubkastens (1), mit den folgenden Schritten:
- Fixieren eines Adapters (8) mit einem Verbindungselement (9) an oder in einer Seitenzarge (5);
- Drehen des Verbindungselementes (9) um eine Achse (21) in eine Montageposition, bei der eine von mindestens zwei Anlageflächen (29, 29') einer Rückseite des Schubkastens (1) zugewandt ist, wobei das Verbindungselement (9) drehbar in oder an dem Adapter (8) gelagert ist und die Achse (21) parallel zu einem Boden (4) und parallel zu einer Längsrichtung der Rückwand (3, 3') ausgerichtet ist;
- Positionieren der Rückwand (3) an der Anlagefläche (29), und
- Fixieren der Rückwand (3) über Rastmittel (12) an dem Verbindungselement (9) oder
- Anlegen einer Rückwand (3') an einer Anlagefläche (25) des Verbindungselementes (9) und Einbringen einer Schraube (26) durch die Rückwand (3') in eine Öffnung (24) an dem Adapter (8) und/ oder des Verbindungselementes (9).

## Claims

1. Drawer (1) having a rear panel (3), a front panel (2), and two side frames (5) connecting the front panel (2) and the rear panel (3), and a bottom (4), wherein at least one adapter (8) is provided on or in at least one side frame (5), which adapter (8) has at least one connecting element (9) for fixing the rear panel (3), whereby the at least one connecting element (9) has at least two bearing surfaces (25, 29, 29') against which the rear panel (3) can be supported and the connecting element (9) is rotatably mounted in or on the adapter (8), whereby the connecting element (9) is mounted rotatably about an axis (21) and at least two bearing surfaces (25, 29) are arranged at a different distance from the axis (21), **characterized in that** the axis (21) is aligned parallel to the bottom (4) and parallel to a longitudinal direction of the rear panel (3, 3').

2. Drawer according to claim 1, **characterized in that** the at least two bearing surfaces (25, 29, 29') on the connecting element (9) are aligned at an angle to one another or are arranged on opposite sides of the connecting element (9).

3. Drawer according to claim 1 or 2, **characterized in that** the connecting element (9) has at least one, preferably two latching lugs (23, 28) for securing against rotation in the adapter (8).

4. Drawer according to one of the preceding claims, **characterized in that** the connecting element (9) has at least one latching means (12) for fixing the rear panel (3).

5. Drawer according to claim 4, **characterized in that** the latching means (12) comprises at least one latching web which protrudes from the associated bearing surface (29) and passes through an opening (11) in the rear panel (3).

6. Drawer according to claim 4 or 5, **characterized in that** a securing element (14) is provided by means of which the latching means (12) are secured in a latched position against unlatching.

7. Drawer according to one of the preceding claims, **characterized in that** the adapter (8) has two connecting elements (9) arranged at different heights.

8. Drawer according to one of the preceding claims, **characterized in that** the rear panel (3) is formed from a sheet steel which is latched on opposite sides to at least one connecting element (9).

9. Drawer according to one of the preceding claims, **characterized in that** the rear panel (3') is made of a plate-shaped wood material and rests against at least one bearing surface (25) of a connecting element (9) respectively arranged on opposite side frames.

10. Drawer according to claim 9, **characterized in that** the rear panel (3') is fixed to the adapter (8) by screws (26).

11. Drawer according to one of the preceding claims, **characterized in that** the connecting element (9) is a shaped part made of plastic.

12. Drawer according to one of the preceding claims, **characterized in that** at least one opening (24, 20, 20') is provided in the adapter (8) and/or connecting element and/or securing element for fastening the rear panel (3') made of a wood material by means of a screw (26).

13. Method for mounting a rear panel (3) on a side frame (5) of a drawer (1), comprising the following steps:
- fixing an adapter (8) with a connecting element (9) on or in a side frame (5);
- rotating the connecting element (9) about an axis (21) into a mounting position in which one of at least two bearing surfaces (29, 29') faces a rear side of the drawer (1), whereby the connecting element (9) is rotatably mounted in or on the adapter (8) and the axis (21) is aligned parallel to the bottom (4) and parallel to a longitudinal direction of the rear panel (3, 3');
- positioning the rear panel (3) on the bearing surface (29), and
- fixing the rear panel (3) to the connecting element (9) via latching means (12), or
- placing a back wall (3') against a bearing surface (25) of the connecting element (9) and inserting a screw (26) through the rear panel (3') into an opening (24) on the adapter (8) and/or the connecting element (9).

## Revendications

1. Tiroir (1) avec une paroi arrière (3), un panneau frontal (2) et deux châssis latéraux (5) reliant le panneau frontal (2) et la paroi arrière (3) et un fond (4), au moins un adaptateur (8) étant prévu sur ou dans au moins un châssis latéral (5), lequel présente au moins un élément de liaison (9) pour la fixation de la paroi arrière (3), le au moins un élément de liaison (9) présentant au moins deux surfaces d'appui (25, 29, 29'), sur lesquelles la paroi arrière (3) peut être appliquée et l'élément de liaison (9) est monté de manière à pouvoir tourner dans ou sur l'adaptateur (8), l'élément de liaison (9) étant monté de manière à pouvoir tourner autour d'un axe (21) et au moins deux surfaces d'appui (25, 29) étant disposées à une distance différente de l'axe (21), **caractérisé en ce que** l'axe (21) est orienté parallèlement au fond (4) et parallèlement à une direction longitudinale de la paroi arrière (3, 3').

2. Tiroir selon la revendication 1, **caractérisé en ce que** les au moins deux surfaces d'appui (25, 29, 29') sur l'élément de liaison (9) sont orientées de manière angulaire l'une par rapport à l'autre ou sont disposées sur des côtés opposés de l'élément de liaison (9).

3. Tiroir selon la revendication 1 ou 2, **caractérisé en ce que** l'élément de liaison (9) présente au moins un, de préférence deux ergots d'arrêt (23, 28) pour empêcher la rotation dans l'adaptateur (8).

4. Tiroir selon l'une des revendications précédentes, **caractérisé en ce que** l'élément de liaison (9) comporte au moins un moyen d'encliquetage (12) pour la fixation de la paroi arrière (3).

5. Tiroir selon la revendication 4, **caractérisé en ce que** le moyen d'encliquetage (12) comprend au moins une barrette d'encliquetage faisant saillie de la surface d'appui (29) correspondante et traversant une ouverture (11) dans la paroi arrière (3).

6. Tiroir selon la revendication 4 ou 5, **caractérisé en ce qu'**il est prévu un élément de sécurité (14) au moyen duquel les moyens d'encliquetage (12) sont protégés contre un déverrouillage dans une position enclenchée.

7. Tiroir selon l'une des revendications précédentes, **caractérisé en ce que** l'adaptateur (8) présente deux éléments de liaison (9) disposés à des hauteurs différentes.

8. Tiroir selon l'une des revendications précédentes, **caractérisé en ce que** la paroi arrière (3) est formée d'une tôle d'acier qui est enclenchée sur des côtés opposés sur au moins un élément de liaison (9).

9. Tiroir selon l'une des revendications précédentes, **caractérisé en ce que** la paroi arrière (3') est fabriquée à partir d'un matériau en bois en forme de plaque et s'appuie sur au moins une surface d'appui (25) d'un élément de liaison (9) disposé respectivement sur des châssis latéraux opposés.

10. Tiroir selon la revendication 9, **caractérisé en ce que** la paroi arrière (3') est fixée à l'adaptateur (8) par des vis (26).

11. Tiroir selon l'une des revendications précédentes, **caractérisé en ce que** l'élément de liaison (9) est une pièce moulée en matière plastique.

12. Tiroir selon l'une des revendications précédentes, **caractérisé en ce qu'il** est prévu dans l'adaptateur (8) et/ou l'élément de liaison et/ou l'élément de sécurité au moins une ouverture (24, 20, 20') pour fixer la paroi arrière (3') en matériau à base de bois au moyen d'une vis (26).

13. Procédé de montage d'une paroi arrière (3) sur un châssis latéral (5) d'un tiroir (1), comprenant les étapes suivantes :
- la fixation d'un adaptateur (8) avec un élément de liaison (9) sur ou dans un châssis latéral (5) ;
- rotation de l'élément de liaison (9) autour d'un axe (21) dans une position de montage dans laquelle l'une d'au moins deux surfaces d'appui (29, 29') est tournée vers une face arrière du tiroir (1), l'élément de liaison (9) étant logé de manière rotative dans ou sur l'adaptateur (8) et l'axe (21) étant orienté parallèlement à un fond (4) et parallèlement à une direction longitudinale de la paroi arrière (3, 3') ;
- le positionnement de la paroi arrière (3) sur la surface d'appui (29), et
- fixation de la paroi arrière (3) par des moyens d'encliquetage (12) sur l'élément de liaison (9) ou
- la mise en place d'une paroi arrière (3') sur une surface d'appui (25) de l'élément de liaison (9) et l'introduction d'une vis (26) à travers la paroi arrière (3') dans une ouverture (24) sur l'adaptateur (8) et/ou l'élément de liaison (9).
